# EUROPÄISCHE PATENTANMELDUNG

(11) **EP 4 624 343 A1**
(43) Veröffentlichungstag der Anmeldung: **01.10.2025**
(21) Anmeldenummer: 24166970.4
(22) Anmeldetag: 27.03.2024
(51) Int. Cl.: B64U 10/14, B05B 15/62

(54) **HALTEVORRICHTUNG ZUM ANBRINGEN EINER SPRÜHDÜSE AN EINEM UNBEMANNTEN LUFTFAHRZEUG**

(71) Anmelder: Swiss Drone Services AG, 8172 Niederglatt (CH)
(72) Erfinder: Bortolan, Marco, 5467 Fisibach (CH)
(74) Vertreter: Keller Schneider Patent- und Markenanwälte AG

(57) **Zusammenfassung**

Die Erfindung betrifft eine Haltevorrichtung (20) zum Anbringen einer Sprühdüse (3) an einem unbemannten Luftfahrzeug (2), insbesondere an einem unbemannten Drehflügelluftfahrzeug, um vom unbemannten Luftfahrzeug (2) aus im Flug des unbemannten Luftfahrzeugs (2) mit der am unbemannten Luftfahrzeug (2) angebrachten Sprühdüse (3) eine Flüssigkeit (100), insbesondere eine Reinigungsflüssigkeit, zu versprühen. Die Haltevorrichtung (20) umfasst ein erstes Trägerelement (21), eine Sprühdüsenhalteeinrichtung (23) zum Halten der Sprühdüse (3), welche Sprühdüsenhalteeinrichtung (23) am ersten Trägerelement (21)angeordnet ist, ein zweites Trägerelement (22), und wenigstens ein Dämpferelement (24.1, ... 24.8), mit welchem wenigstens einen Dämpferelement (24.1, ... 24.8) das erste Trägerelement (21) am zweiten Trägerelement (22) gehalten ist und welches wenigstens eine Dämpferelement (24.1, ... 24.8) zwischen dem ersten Trägerelement (21) und dem zweiten Trägerelement (22) angeordnet ist, um eine Übertragung von Schwingungen vom ersten Trägerelement (21) auf das zweite Trägerelement (22) zu reduzieren. Weiter betrifft die Erfindung eine Anordnung (1) aus einem unbemannten Luftfahrzeug (2), insbesondere unbemannten Drehflügelluftfahrzeug, einer erfindungsgemässen Haltevorrichtung (20) und einer Sprühdüse (3) zum Versprühen einer Flüssigkeit (100), insbesondere einer Reinigungsflüssigkeit, wobei die Sprühdüse (3) durch die Haltevorrichtung (20) am unbemannten Luftfahrzeug (2) angebracht ist, indem die Sprühdüse (3) von der Sprühdüsenhalterung (23) der Haltevorrichtung (20) gehalten ist und die Haltevorrichtung (20) an ihrem zweiten Trägerelement (22) am unbemannten Luftfahrzeug (2) angebracht ist. Ausserdem betrifft die Erfindung ein Verfahren zum Betreiben einer erfindungsgemässen Anordnung (1), in welchem mit dem unbemannten Luftfahrzeug (2) eine Fassade oder ein Dach eines Gebäudes abgeflogen wird und dabei die Fassade bzw. das Dach mit der Flüssigkeit (100), insbesondere der Reinigungsflüssigkeit, besprüht wird.

## Beschreibung

### Technisches Gebiet

Die Erfindung betrifft eine Haltevorrichtung zum Anbringen einer Sprühdüse an einem unbemannten Luftfahrzeug, insbesondere an einem unbemannten Drehflügelluftfahrzeug.

### Stand der Technik

Zur Reinigung oder für sonstige Behandlungen von Fassaden und Dächern kann es notwendig sein, eine betreffende Fassade bzw. ein betreffendes Dach mit einer Flüssigkeit, insbesondere der Reinigungsflüssigkeit, zu besprühen. Idealerweise erfolgt dabei das Besprühen der Fassade bzw. des Dachs mit der Flüssigkeit möglichst gleichmässig, damit die Behandlung gleichmässig erfolgt.

Eine Möglichkeit, eine Fassade oder ein Dach eines Gebäudes möglichst gleichmässig mit einer Flüssigkeit wie beispielsweise einer Reinigungsflüssigkeit zu besprühen, ist, das Gebäude mit einem Baugerüst zu versehen und ausgehend von dem Baugerüst die betreffende Fassade bzw. das betreffende Dach mit der Flüssigkeit zu besprühen. Dieses Vorgehen ist jedoch sehr zeitaufwändig und verursacht sehr hohe I<osten.

### Darstellung der Erfindung

Aufgabe der Erfindung ist es, eine Vorrichtung sowie ein Verfahren zu schaffen, welche ein gleichmässiges Besprühen einer Fassade oder eines Dachs eines Gebäudes mit einer Flüssigkeit, insbesondere einer Reinigungsflüssigkeit, rasch und kostengünstig ermöglichen.

Die Lösung der Aufgabe ist durch die Merkmale des Anspruchs 1 definiert. Die Erfindung ist durch eine Haltevorrichtung zum Anbringen einer Sprühdüse an einem unbemannten Luftfahrzeug, insbesondere an einem unbemannten Drehflügelluftfahrzeug, um vom unbemannten Luftfahrzeug aus im Flug des unbemannten Luftfahrzeugs mit der am unbemannten Luftfahrzeug angebrachten Sprühdüse eine Flüssigkeit, insbesondere eine Reinigungsflüssigkeit, zu versprühen, gegeben. Diese Haltevorrichtung umfasst ein erstes Trägerelement, eine Sprühdüsenhalteeinrichtung zum direkten oder indirekten Halten der Sprühdüse, welche Sprühdüsenhalteeinrichtung am ersten Trägerelement angeordnet ist, ein zweites Trägerelement, und wenigstens ein Dämpferelement, mit welchem wenigstens einen Dämpferelement das erste Trägerelement am zweiten Trägerelement gehalten ist und welches wenigstens eine Dämpferelement zwischen dem ersten Trägerelement und dem zweiten Trägerelement angeordnet ist, um eine Übertragung von Schwingungen vom ersten Trägerelement auf das zweite Trägerelement zu reduzieren. Dabei kann die Sprühdüse direkt oder indirekt von der Sprühdüsenhalteeinrichtung gehalten sein. Wenn die Sprühdüse indirekt von der Sprühdüsenhalteeinrichtung gehalten ist, dann ist die Sprühdüse vorteilhafterweise an einer Sprühlanze angeordnet, wobei die Sprühdüsenhalteeinrichtung zum Halten der Sprühlanze ausgebildet ist.

Die Lösung der Aufgabe ist weiter durch eine Anordnung aus einem unbemannten Luftfahrzeug, insbesondere unbemannten Drehflügelluftfahrzeug, einer erfindungsgemässen Haltevorrichtung und einer Sprühdüse zum Versprühen einer Flüssigkeit, insbesondere einer Reinigungsflüssigkeit, gegeben. Eine derartige Anordnung beinhaltet ein unbemanntes Luftfahrzeug, insbesondere unbemanntes Drehflügelluftfahrzeug, eine erfindungsgemässe Haltevorrichtung und eine Sprühdüse zum Versprühen einer Flüssigkeit, insbesondere einer Reinigungsflüssigkeit. Dabei ist die Sprühdüse durch die Haltevorrichtung direkt oder indirekt am unbemannten Luftfahrzeug angebracht, indem die Sprühdüse direkt oder indirekt von der Sprühdüsenhalteeinrichtung der Haltevorrichtung gehalten ist und die Haltevorrichtung an ihrem zweiten Trägerelement am unbemannten Luftfahrzeug angebracht ist.

Vorzugsweise ist dabei das unbemannte Luftfahrzeug eine Flugdrohne. Falls das unbemannte Luftfahrzeug ein Drehflügelluftfahrzeug ist, so weist die das unbemannte Luftfahrzeug bevorzugt wenigstens drei Rotoren, besonders bevorzugt wenigstens vier Rotoren, auf. So kann das unbemannte Luftfahrzeug drei Rotoren, vier Rotoren, sechs Rotoren oder acht Rotoren aufweisen. Das unbemannte Luftfahrzeug kann aber auch zwei Rotoren, nur einen Rotor oder gänzlich ohne Rotor ausgebildet sein.

Vorzugsweise wird diese Anordnung eingesetzt, um eine Fassade oder ein Dach eines Gebäudes mit der Flüssigkeit, insbesondere der Reinigungsflüssigkeit, zu besprühen. Die Lösung der Aufgabe ist daher ausserdem durch ein Verfahren zum Betreiben der Anordnung gegeben, in welchem Verfahren mit dem unbemannten Luftfahrzeug eine Fassade oder ein Dach eines Gebäudes abgeflogen und dabei die Fassade bzw. das Dach mit der Flüssigkeit, insbesondere der Reinigungsflüssigkeit, besprüht wird.

In einer bevorzugten Variante wird dabei in einem ersten Schritt das Gebäude mit der zu reinigenden Fassade und/oder dem zu reinigenden Dach mit dem unbemannten Luftfahrzeug abgeflogen und mit einem Sensor gescannt und auf seine Dimensionen vermessen. Vorzugsweise wird anschliessend in einem zweiten Schritt mit dem unbemannten Luftfahrzeug die zu reinigende Fassade bzw. das zu reinigende Dach abgeflogen, insbesondere automatisch abgeflogen, und mit der Flüssigkeit, insbesondere der Reinigungsflüssigkeit, besprüht. In diesem Fall weist das unbemannte Luftfahrzeug vorteilhafterweise einen Sensor zum Scannen und vermessen der Dimensionen der zu reinigenden Fassade und/oder des zu reinigenden Dachs auf. Ein solcher Sensor kann beispielsweise ein Bildsensor, insbesondere eine Stereokamera, oder ein LIDAR sein. Um das automatische Abfliegen der zu reinigenden Fassade bzw. des zu reinigenden Dachs zu ermöglichen, ist das unbemannte Luftfahrzeug oder eine allenfalls vorhandene Fernsteuerung des unbemannten Luftfahrzeugs zudem vorteilhafterweise mit einem Autopilot ausgerüstet, welcher dazu ausgebildet ist, mit dem unbemannten Luftfahrzeug während des Besprühens mit der Flüssigkeit die zu reinigende Fassade und/oder das zu reinigende Dach automatisch abzufliegen.

Die erfindungsgemässe Lösung hat den Vorteil, dass ein gleichmässiges Besprühen einer Fassade oder eines Dachs eines Gebäudes mit einer Flüssigkeit, insbesondere einer Reinigungsflüssigkeit, rasch und kostengünstig ermöglicht wird.

In der erfindungsgemässen Haltevorrichtung weist die Sprühdüsenhalteeinrichtung vorteilhafterweise wenigstens eine Schnellspannvorrichtung auf. Eine Schnellspannvorrichtung ist vorzugsweise eine Klemmvorrichtung, die sich schnell und ohne Werkzeug von Hand lösen und festsetzen bzw. spannen lässt.

Vorzugsweise ist das erste Trägerelement durch das wenigstens eine Dämpferelement im Wesentlichen parallel zum zweiten Trägerelement am zweiten Trägerelement gehalten.

Vorzugsweise ist das erste Trägerelement durch das wenigstens eine Dämpferelement in einem Abstand von etwa 0.5 cm bis etwa 2 cm zum zweiten Trägerelement am zweiten Trägerelement gehalten.

Das das erste Trägerelement kann aber auch durch das wenigstens eine Dämpferelement in einem Abstand von weniger als etwa 0.5 cm oder mehr als etwa 2 cm zum zweiten Trägerelement am zweiten Trägerelement gehalten sein.

Bevorzugt sind das wenigstens eine Dämpferelement wenigstens zwei Dämpferelemente. Besonders bevorzugt sind das wenigstens eine Dämpferelement wenigstens vier Dämpferelemente. Ganz besonders bevorzugt sind das wenigstens eine Dämpferelement wenigstens sechs Dämpferelemente.

Haltevorrichtung nach Anspruch 1, dadurch gekennzeichnet, dass jedes des wenigstens einen Dämpferelements einen I<örper aus Gummi aufweist.

Vorzugsweise ist Gummi ein Vulkanisat eines Natur- oder Synthesel<autschul<s.

Das wenigstens eine Dämpferelement kann jedoch auch einen I<örper aus einem anderen Material als Gummi aufweisen.

Bevorzugt ist bei jedem des wenigstens einen Dämpferelements der I<örper ein Hohlkörper mit einem Hohlraum, welcher Hohlraum vorzugsweise mit einem Gel gefüllt ist. Dadurch kann eine Übertragung von Schwingungen vom ersten Trägerelement auf das zweite Trägerelement besonders effektiv reduziert werden.

Ein Gel ist dabei vorzugsweise ein disperses System, das aus mindestens zwei I<omponenten besteht. Eine feste, erste der mindestens zwei I<omponenten bildet dabei vorzugsweise ein schwammartiges, dreidimensionales Netzwerk, dessen Poren durch eine Flüssigkeit oder ein Gas ausgefüllt sind. Eine flüssige bzw. gasförmige, zweite der mindestens zwei I<omponenten ist dadurch vorzugsweise in der ersten der mindestens zwei I<omponenten immobilisiert. Vorzugsweise sind die mindestens zwei I<omponenten bil<ohärent bzw. durchdringen sich die mindestens zwei I<omponenten vollständig.

Vorzugsweise ist jedes des wenigstens einen Dämpferelements mit wenigstens einem des ersten Trägerelements und des zweiten Trägerelements formschlüssig verrastet.

Vorzugsweise ist jedes des wenigstens einen Dämpferelements mit wenigstens einem des ersten Trägerelements und des zweiten Trägerelements formschlüssig verschraubt.

In einer Variante davon ist jedes des wenigstens einen Dämpferelements mit wenigstens einem des ersten Trägerelements und des zweiten Trägerelements formschlüssig verrastet und dem anderen des ersten Trägerelements und des zweiten Trägerelements verschraubt.

Vorteilhafterweise weist die Haltevorrichtung ein Scharnier auf, wobei das erste Trägerelement über das Scharnier um eine Scharnierachse des Scharniers schwenkbar mit dem zweiten Trägerelement verbunden ist. Dies hat den Vorteil, dass, wenn das wenigstens eine Dämpferelement reisst, das erste Trägerelement mit der Sprühdüsenhalteeinrichtung und der Sprühdüse um die Scharnierachse nach unten kippen kann, ohne vom unbemannten Luftfahrzeug abzufallen.

Vorzugsweise ist das Scharnier in einem Endbereich des ersten Trägerelements am ersten Trägerelement angeordnet. In einer besonders bevorzugten Variante ist das Scharnier zudem in einem Endbereich des zweiten Trägerelements am zweiten Trägerelement angeordnet.

Es besteht aber auch die Möglichkeit, dass die Haltevorrichtung kein solches Scharnier aufweist.

Vorzugsweise weist die Haltevorrichtung ein Sicherungselement zum Halten des ersten Trägerelements auf, falls eines oder mehrere des wenigstens einen Dämpferelements reisst und sich das erste Trägerelement vom zweiten Trägerelement löst und vom zweiten Trägerelement abfällt oder vom zweiten Trägerelement wegkippt. Dies hat den Vorteil, dass das erste Trägerelement nicht hinunterfallen kann, sondern vom Sicherungselement aufgefangen wird.

Vorzugsweise ist das Sicherungselement an einem ersten des ersten Trägerelements und des zweiten Trägerelements angeordnet und hintergreift zumindest an einer Stelle des zweiten des ersten Trägerelements und des zweiten Trägerelements das zweite des ersten Trägerelements und des zweiten Trägerelements, um das erste Trägerelement zu halten, falls eines oder mehrere des wenigstens einen Dämpferelements reisst und sich das erste Trägerelement vom zweiten Trägerelement löst und vom zweiten Trägerelement abfällt oder vom zweiten Trägerelement wegkippt. Dabei kann das Sicherungselement als separates, am ersten des ersten Trägerelements und des zweiten Trägerelements angebrachtes Element ausgebildet sein oder kann einstückig mit dem ersten des ersten Trägerelements und des zweiten Trägerelements ausgebildet sein.

Das Sicherungselement kann beispielsweise ein rahmenförmiges Element sein.

Es besteht aber auch die Möglichkeit, dass die Haltevorrichtung kein solches Sicherungselement aufweist.

Bevorzugt weist die Haltevorrichtung wenigstens einen flexiblen Abstandhalter zum Anbringen des zweiten Trägerelements am unbemannten Luftfahrzeug und damit zum Anbringen der Haltevorrichtung am unbemannten Luftfahrzeug auf. Durch wenigstens einen solchen flexiblen Abstandhalter kann eine Übertragung von Schwingungen vom ersten Trägerelement auf das unbemannte Luftfahrzeug weiter reduziert werden.

Vorzugsweise ist der wenigstens eine flexible Abstandhalter aus einem thermoplastischen Elastomer gefertigt. Vorzugsweise ist der wenigstens eine flexible Abstandhalter aus einem Material gefertigt, welches eine Shore A-Härte von weniger als 87 aufweist. Beispielsweise ist der wenigstens eine flexible Abstandhalter aus Gummi gefertigt.

Alternativ dazu besteht aber auch die Möglichkeit, dass die Haltevorrichtung ohne einen solchen einen flexiblen Abstandhalter zum Anbringen des zweiten Trägerelements am unbemannten Luftfahrzeug und damit zum Anbringen der Haltevorrichtung am unbemannten Luftfahrzeug ausgebildet ist.

Bevorzugt ist wenigstens eines des ersten Trägerelements und des zweiten Trägerelements aus I<unststoff gefertigt. Besonders bevorzugt sind das erste Trägerelement und das zweite Trägerelement aus I<unststoff gefertigt.

Der I<unststoff ist vorzugsweise Polyamid, insbesondere glasfaserverstärkter Polyamid.

Alternativ können aber auch beide Trägerelemente aus einem anderen Material als I<unststoff gefertigt sein.

Die Anordnung aus einem unbemannten Luftfahrzeug, insbesondere unbemannten Drehflügelluftfahrzeug, einer erfindungsgemässen Haltevorrichtung und einer Sprühdüse zum Versprühen einer Flüssigkeit, insbesondere einer Reinigungsflüssigkeit weist vorzugsweise eine Flüssigl<eitsversorgungsvorrichtung zum Versorgen der Sprühdüse mit der Flüssigkeit, insbesondere der Reinigungsflüssigkeit, auf, um mit der Sprühdüse die Flüssigkeit zu versprühen.

Vorteilhafterweise ist die Flüssigl<eitsversorgungsvorrichtung separat vom unbemannten Luftfahrzeug angeordnet. Es besteht aber auch die Möglichkeit, dass die Flüssigkeitsversorgungsvorrichtung am unbemannten Luftfahrzeug angeordnet ist.

Vorzugsweise umfasst die Flüssigl<eitsversorgungsvorrichtung mindestens einen Tank zum Speichern der Flüssigkeit, insbesondere der Reinigungsflüssigkeit.

Vorteilhafterweise weist die Anordnung einen Schlauch mit einem ersten Ende und einem zweiten Ende auf, um die Flüssigkeit von der Flüssigl<eitsversorgungsvorrichtung zur Sprühdüse, insbesondere von der Flüssigl<eitsversorgungsvorrichtung zum unbemannten Luftfahrzeug und zur Sprühdüse, zu führen.

Vorteilhafterweise ist der Schlauch mit seinem ersten Ende mit der Flüssigl<eitsversorgungsvorrichtung verbindbar.

Vorteilhafterweise ist der Schlauch mit seinem zweiten Ende mit der Sprühdüse verbindbar.

Bevorzugt weist der Schlauch einen ersten Abschnitt auf, welcher dem ersten Ende des Schlauchs anschliesst und dass der Schlauch einen zweiten Abschnitt aufweist, welcher dem zweiten Ende des Schlauchs anschliesst, wobei der Schlauch in seinem ersten Abschnitt einen grösseren Durchmesser als in seinem zweiten Abschnitt aufweist. Dies hat den Vorteil, dass ein Druckverlust im Schlauch reduziert werden kann.

Es besteht aber auch die Möglichkeit, dass der Schlauch entlang seiner gesamten Länge einen gleichen Durchmesser aufweist.

Vorteilhafterweise ist der Schlauch mit dem ersten Ende des Schlauchs mit der Flüssigl<eitsversorgungsvorrichtung und mit dem zweiten Ende des Schlauchs mit der Sprühdüse verbunden, um die Flüssigkeit von der Flüssigl<eitsversorgungsvorrichtung zur Sprühdüse zu führen, um die Sprühdüse mit der Flüssigkeit zum Versprühen der Flüssigkeit mit der Sprühdüse zu versorgen.

Bevorzugt weist der Schlauch eine Reissfestigkeit, insbesondere nach DIN EN ISO 527 von 2019, von mindestens 18 N/mm² auf.

Vorteilhafterweise weist der Schlauch einen Innenschlauch und eine Ummantelung auf. Vorzugsweise weist der Innenschlauch eine Reissfestigkeit, insbesondere nach DIN EN ISO 527 von 2019, von mindestens 18 N/mm² auf. Bevorzugt weist die Ummantelung eine Reissfestigkeit, insbesondere nach DIN EN ISO 527 von 2019, von mindestens 12 N/mm², besonders bevorzugt von mindestens 18 N/mm², auf. Dies hat einerseits den Vorteil, dass durch den Schlauch eine zuverlässige Flüssigkeitsleitung von der Flüssigl<eitsversorgungsvorrichtung zum unbemannten Luftfahrzeug gewährleistet ist. Andererseits hat dies den Vorteil, dass durch den Schlauch ein zuverlässiges Sicherungssystem für das unbemannte Luftfahrzeug gebildet wird.

Alternativ dazu kann der Schlauch aber auch eine geringere Reissfestigkeit aufweisen.

Vorzugsweise weist das unbemannte Luftfahrzeug ein Landegestell auf und ist der Schlauch in einem Bereich seines zweiten Endes am Landegestell befestigt ist. Dies hat den Vorteil, dass durch den Schlauch ein sehr zuverlässiges Sicherungssystem für das unbemannte Luftfahrzeug gebildet wird. Besonders bevorzugt ist dabei der Schlauch mittels einer Schnellkupplung am Landegestell des unbemannten Luftfahrzeugs befestigt.

Alternativ dazu kann der Schlauch aber auch im Bereich seines zweiten Endes nicht am Landegestell befestigt sein. Weiter besteht auch die Möglichkeit, dass das unbemannte Luftfahrzeug kein Landegestell aufweist.

Vorzugsweise weist die Anordnung eine Sprühlanze auf, an welcher Sprühlanze die Sprühdüse angeordnet ist und welche Sprühlanze von der Sprühdüsenhalteeinrichtung gehalten ist.

Vorzugsweise ist die Sprühlanze aus einem Rohr, insbesondere aus einem dünnwandigen Rohr, aus Carbonfasermaterial gefertigt. Vorteilhafterweise ist der Schlauch mit seinem zweiten Ende durch das Rohr zur Sprühdüse geführt und mit der Sprühdüse verbunden.

Vorzugsweise weist die Sprühlanze in ihrem Innern wenigstens einen Schaumstoffkörper auf, durch welcher der durch die Sprühlanze geführte Schlauch in der Sprühlanze gehalten ist.

Die Sprühlanze kann aber auch anders ausgebildet sein. Genauso kann die Anordnung auch ohne Sprühlanze ausgebildet werden.

Falls die Anordnung die Sprühlanze aufweist, so weist die Sprühlanze vorzugsweise ein I<nicl<gelenl< auf, durch welches I<nicl<gelenl< eine Ausrichtung der Sprühdüse relativ zum unbemannten Luftfahrzeug einstellbar ist, um eine Sprührichtung, in welche Sprührichtung relativ zum unbemannten Luftfahrzeug mit der Sprühdüse die Flüssigkeit versprühbar ist, einzustellen.

Dabei ist unerheblich, ob ein I<nicl<winl<el des I<nicl<gelenl<s zum Einstellen der Ausrichtung der Sprühdüse relativ zum unbemannten Luftfahrzeug am Boden eingestellt wird oder ob die Anordnung eine Stellvorrichtung zum Einstellen des I<nicl<winl<els des I<nicl<gelenl<s im Flug des unbemannten Luftfahrzeugs zum Einstellen der Ausrichtung der Sprühdüse relativ zum unbemannten Luftfahrzeug aufweist.

Alternativ dazu besteht aber die Möglichkeit, dass die Sprühlanze ohne I<nicl<gelenl< ausgebildet ist. Wenn die Sprühlanze ohne I<nicl<gelenl<t ausgebildet ist, kann die Sprühlanze einfacher und I<ostengünstiger hergestellt werden.

Vorzugsweise ist die Sprühdüse eine Rotationsdüse. Eine Rotationsdüse weist den Vorteil auf, dass beim Versprühen der Flüssigkeit ein ideales Sprühbild erzeugt wird. Aufgrund des wenigstens einen Dämpferelements wird verhindert, dass durch die Bewegung der Rotationsdüse erzeugte Vibrationen von der Rotationsdüse auf das unbemannte Luftfahrzeug übertragen werden.

Wenn die Haltevorrichtung den wenigstens einen flexiblen Abstandhalter zum Anbringen des zweiten Trägerelements am unbemannten Luftfahrzeug und damit zum Anbringen der Haltevorrichtung am unbemannten Luftfahrzeug aufweist, dann ist in der Anordnung der wenigstens eine flexible Abstandhalter vorteilhafterweise zwischen dem zweiten Trägerelement und dem unbemannten Luftfahrzeug angeordnet, um eine Übertragung von Schwingungen vom zweiten Trägerelement auf das unbemannte Luftfahrzeug zu reduzieren.

Alternativ dazu besteht aber auch die Möglichkeit, dass die Sprühdüse keine Rotationsdüse ist.

Vorzugsweise umfasst die Flüssigl<eitsversorgungsvorrichtung mindestens einen Tank zum Speichern eines Reinigungsmittels. Weiter weist die Flüssigl<eitsversorgungsvorrichtung vorzugsweise einen Anschluss zum Einlassen von Wasser, insbesondere Osmosewasser, auf. Vorzugsweise ist die Flüssigl<eitsversorgungsvorrichtung dazu ausgebildet, das Reinigungsmittel mit dem Wasser zu vermischen und als die Flüssigkeit, insbesondere die Reinigungsflüssigkeit, durch den Schlauch zu Sprühdüse zu leiten.

Vorzugsweise umfasst die Flüssigl<eitsversorgungsvorrichtung eine Pumpe, um die Flüssigkeit, insbesondere die Reinigungsflüssigkeit, mit einem Druck von bis zu 180 bar in den Schlauch einzuleiten.

Vorzugsweise weist die Flüssigl<eitsversorgungsvorrichtung eine Rolle zum Aufwickeln des Schlauchs auf.

Vorzugsweise weist die Flüssigl<eitsversorgungsvorrichtung einen mit Treibstoff betreibbarer Generator zur Energieversorgung der Flüssigl<eitsversorgungsvorrichtung auf.

Vorzugsweise beinhaltet die Flüssigl<eitsversorgungsvorrichtung eine Steuereinheit zum Steuern der Flüssigl<eitsversorgungsvorrichtung.

Vorteilhafterweise ist die Flüssigl<eitsversorgungsvorrichtung eine modular aufgebaute Station.

Vorteilhafterweise beinhaltet die Anordnung eine Fernsteuerung, welche zum Fernsteuern des unbemannten Luftfahrzeugs ausgebildet ist. In einer bevorzugten Variante ist die Fernsteuerung zudem zum Fernsteuern der Flüssigl<eitsversorgungsvorrichtung ausgebildet.

Die Anordnung kann jedoch auch ohne derartige Fernsteuerung zum Fernsteuern des unbemannten Luftfahrzeugs ausgebildet sein. Dies kann beispielsweise der Fall sein, wenn das unbemannte Luftfahrzeug einen Autopiloten aufweist.

Vorteilhafterweise ist das unbemannte Luftfahrzeug oder die Fernsteuerung mit einem Autopiloten ausgerüstet. Damit ist das unbemannte Luftfahrzeug vorzugsweise für ein autonomes Fliegen ausgebildet. Vorteilhafterweise weist der Autopilot ein auf Echtzeitl<inematil< (RTI<) basierendes Navigationsmodul auf. Eine Echtzeitl<inematil< hat den Vorteil, dass das unbemannte Luftfahrzeug mit der Echtzeitl<inematil< problemlos mit einer maximalen Abweichung von 1 cm bis 2 cm zu einem gewünschten bzw. geplanten Flugpfad entlang dem gewünschten bzw. geplanten Flugpfad geflogen werden kann.

Die Ausrüstung des unbemannten Luftfahrzeugs oder der Fernsteuerung mit einem Autopilot hat den Vorteil, dass mit der Anordnung eine Fassade oder ein Dach eines Gebäudes gleichmässiger mit der Flüssigkeit besprüht werden kann. Der Grund dafür ist, dass eine im unbemannten Luftfahrzeug allenfalls vorhandene Automatik zur I<ollisionsverhinderung des unbemannten Luftfahrzeugs ausgeschaltet werden muss, wenn das unbemannte Luftfahrzeug näher als eine Minimaldistanz, beispielsweise näher als 1.5 m, an das Gebäude heranfliegen soll, um die Fassade oder das Dach zu besprühen. Ein manuelles Fliegen eines unbemannten Luftfahrzeugs in einem derart geringen Abstand zu einer Oberfläche ist jedoch sehr anspruchsvoll. Durch einen Autopiloten kann dies jedoch problemlos ermöglicht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b, c: je eine Ansicht einer Anordnung mit einem unbemannten Luftfahrzeug, welches ein unbemanntes Drehflügelluftfahrzeug ist, einer erfindungsgemässen Haltevorrichtung, einer Sprühlanze und einer Sprühdüse zum Versprühen einer Flüssigkeit, insbesondere einer Reinigungsflüssigl<eit,
- Fig. 2a, b, c, d: verschiedene Ansichten der erfindungsgemässen Haltevorrichtung mit der von der Sprühdüsenhalteeinrichtung gehaltenen Sprühlanze,
- Fig. 3: eine Schrägansicht der erfindungsgemässen Haltevorrichtung mit der von der Sprühdüsenhalteeinrichtung gehaltenen Sprühlanze zusammen mit der an der Spitze der Sprühlanze angeordneten Sprühdüse sowie mit dem Strahl von mit der Sprühdüse versprühter Flüssigkeit,
- Fig. 4a, 4b: eine Frontalansicht der erfindungsgemässen Haltevorrichtung mit der Sprühlanze und der Sprühdüse mit der Flüssigkeit versprühenden Sprühdüse und der Haltevorrichtung dahinter aus einer ersten Perspektive, sowie eine Frontalansicht der erfindungsgemässen Haltevorrichtung mit der Sprühlanze und der Sprühdüse aus einer zweiten, der ersten Perspektive gegenüberliegenden Perspektive,
- Fig. 5a, 5b: je eine Schrägansicht einer zur Anordnung gehörenden eine Flüssigl<eitsversorgungsvorrichtung zum Versorgen der Sprühdüse mit der Flüssigkeit,
- Fig. 6: eine Schrägansicht einer weiteren erfindungsgemässen Haltevorrichtung, und
- Fig. 7: eine Variante einer Sprühlanze

Grundsätzlich sind in den Figuren gleiche Teile mit gleichen Bezugszeichen versehen.

### Wege zur Ausführung der Erfindung

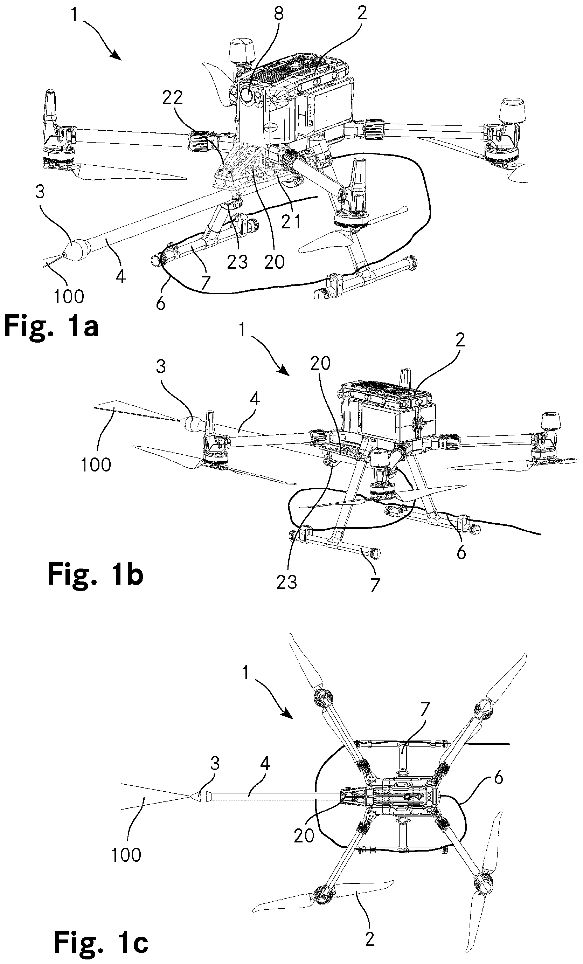

Die Figuren 1a, 1b und 1c zeigen je eine Ansicht einer Anordnung 1 mit einem unbemannten Luftfahrzeug 2, welches ein unbemanntes Drehflügelluftfahrzeug ist, einer erfindungsgemässen Haltevorrichtung 20, einer Sprühlanze 4 und einer Sprühdüse 3 zum Versprühen einer Flüssigkeit 100, insbesondere einer Reinigungsflüssigkeit. Figuren 1a und 1b zeigen dabei je eine Schrägansicht, während Figur 1c eine Aufsicht zeigt.

Die Sprühdüse 3 ist eine Rotationsdüse und ist in der Sprühlanze 4 angeordnet, welche Sprühlanze 4 durch die Haltevorrichtung 20 am unbemannten Luftfahrzeug 2 angebracht ist. Damit ist die Sprühdüse 3 indirekt am unbemannten Luftfahrzeug 2 angebracht, indem die Sprühdüse 3 indirekt von einer Sprühdüsenhalteeinrichtung 23 der Haltevorrichtung 20 gehalten ist. Hierzu ist die Haltevorrichtung 20 an ihrem zweiten Trägerelement 22 am unbemannten Luftfahrzeug 2 angebracht.

Vorliegend ist das unbemannte Luftfahrzeug 2 eine Flugdrohne mit vier Rotoren. Das unbemannte Luftfahrzeug 2 weist zudem ein Landegestell 7 auf.

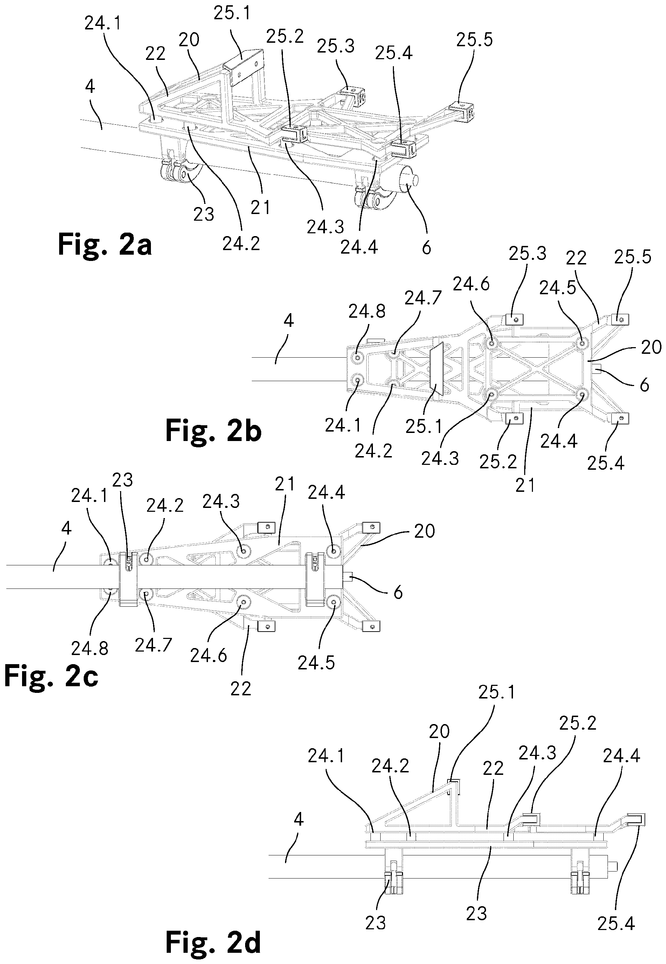

Die Figuren 2a, 2b, 2c und 2d zeigen verschiedene Ansichten der erfindungsgemässen Haltevorrichtung 20 mit der von der Sprühdüsenhalteeinrichtung 23 gehaltenen Sprühlanze 4, wobei jedoch jeweils nicht die gesamte Sprühlanze 4 gezeigt ist. In diesen Ansichten ist zu erkennen, dass die Haltevorrichtung 20 ein erstes Trägerelement 21 und das zweite Trägerelement 22 aufweist. Diese beiden Trägerelemente 21, 22 sind aus Polyamid oder aus glasfaserverstärktem Polyamid gefertigt. Weiter weist die Haltevorrichtung 20 die Sprühdüsenhalteeinrichtung 23 zum direkten oder indirekten Halten der Sprühdüse 3. Diese Sprühdüsenhalteeinrichtung 23 ist am ersten Trägerelement 21 angeordnet. Ausserdem umfasst die Haltevorrichtung 20 acht Dämpferelemente 24.1, ..., 24.8, mit welchen acht Dämpferelementen 24.1, ..., 24.8 das erste Trägerelement 21 am zweiten Trägerelement 22 gehalten ist und welche acht Dämpferelemente 24.1, ..., 24.8 zwischen dem ersten Trägerelement 21 und dem zweiten Trägerelement 22 angeordnet sind, um eine Übertragung von Schwingungen vom ersten Trägerelement 21 auf das zweite Trägerelement 22 zu reduzieren.

Durch die acht Dämpferelemente 24.1, ..., 24.8 ist das erste Trägerelement 21 in einem Abstand von 1.4 cm zum zweiten Trägerelement 22 im Wesentlichen parallel zum zweiten Trägerelement 22 am zweiten Trägerelement 22 gehalten. Dabei ist jedes der acht Dämpferelemente 24.1, ..., 24.8 mit wenigstens einem des ersten Trägerelements 21 und des zweiten Trägerelements 22 formschlüssig verrastet.

Jedes der acht Dämpferelemente 24.1, ..., 24.8 weist einen I<örper aus Gummi auf.

Wie in den Figuren 2a bis 2d gezeigt, weist die Haltevorrichtung 20 fünf flexible Abstandhalter 25.1, ... 25.5 zum Anbringen des zweiten Trägerelements 22 am unbemannten Luftfahrzeug 2 und damit zum Anbringen der Haltevorrichtung 20 am unbemannten Luftfahrzeug 2 auf. Diese fünf flexiblen Abstandhalter 25.1, ... 25.5 sind aus Gummi gefertigt. Durch diese fünf flexible Abstandhalter 25.1, ... 25.5 kann eine Übertragung von Schwingungen vom ersten Trägerelement 21 auf das unbemannte Luftfahrzeug 2 weiter reduziert werden.

Die Sprühdüsenhalteeinrichtung 23 ist am ersten weist zwei Schnellspannvorrichtungen 25.1, 25.2 auf. Diese Schnellspannvorrichtungen 25.1, 25.2 sind Klemmvorrichtungen, die sich schnell und ohne Werkzeug von Hand lösen und festsetzen bzw. spannen lassen.

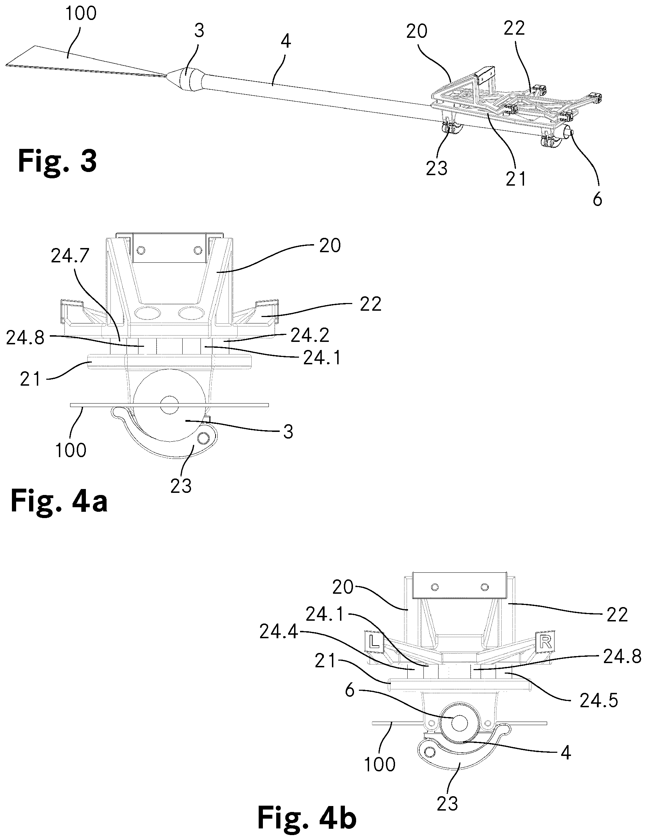

Figur 3 zeigt eine Schrägansicht der erfindungsgemässen Haltevorrichtung 20 mit der gesamten von der Sprühdüsenhalteeinrichtung 23 gehaltenen Sprühlanze 4 zusammen mit der an der Spitze der Sprühlanze 4 angeordneten Sprühdüse 3 sowie mit dem Strahl von mit der Sprühdüse 3 versprühter Flüssigkeit 100. Die Sprühlanze 4 ist aus einem dünnwandigen Rohr aus Carbonfasermaterial gefertigt.

Figur 4a zeigt eine Frontalansicht der erfindungsgemässen Haltevorrichtung 20 mit der Sprühlanze 4 und der Sprühdüse 3 mit der Flüssigkeit 100 versprühenden Sprühdüse 3 und der Haltevorrichtung 2 dahinter. Figur 4b hingegen zeigt eine Frontalansicht der erfindungsgemässen Haltevorrichtung 20 mit der Sprühlanze 4 und der Sprühdüse 3 im Vergleich zur Figur 4a aus der gegenüberliegenden Perspektive.

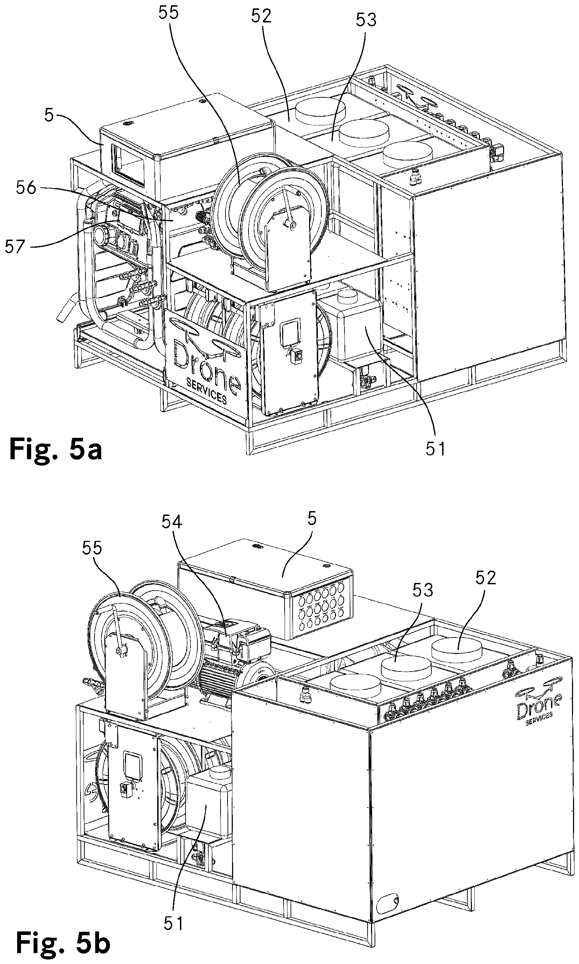

Die in den vorgehenden Figuren gezeigte Anordnung 1 weist zusätzlich eine Flüssigl<eitsversorgungsvorrichtung 5 zum Versorgen der Sprühdüse 3 mit der Flüssigkeit 100, insbesondere der Reinigungsflüssigkeit, auf, um mit der Sprühdüse 3 die Flüssigkeit 100 zu versprühen. Diese Flüssigl<eitsversorgungsvorrichtung 5 ist separat vom unbemannten Luftfahrzeug 2 angeordnet und daher in den vorgehenden Figuren nicht mit dargestellt. Figuren 5a und 5b zeigen jedoch je eine Schrägansicht dieser Flüssigl<eitsversorgungsvorrichtung 5.

Wie in den Figuren 5a und 5b zu erkennen ist, umfasst die Flüssigkeitsversorgungsvorrichtung 5 einen Tank 53 zum Speichern der Flüssigkeit 100. Weiter umfasst die Flüssigl<eitsversorgungsvorrichtung 5 einen Tank 51 zum Speichern eines Reinigungsmittels. Zudem weist die Flüssigl<eitsversorgungsvorrichtung 5 einen Anschluss zum Einlassen von Wasser, insbesondere Osmosewasser, sowie einen Tank 52 zum Speichern dieses Wassers auf. Dabei ist die Flüssigl<eitsversorgungsvorrichtung 5 dazu ausgebildet, das Reinigungsmittel mit dem Wasser zu vermischen und als die Flüssigkeit 100 bzw. Reinigungsflüssigkeit im Tank 53 zum Speichern der Flüssigkeit 100 zu speichern.

Die Flüssigl<eitsversorgungsvorrichtung 5 ist eine modular aufgebaute Station. Sie weist einen mit Treibstoff betreibbarer Generator 56 zur Energieversorgung der Flüssigl<eitsversorgungsvorrichtung 5 auf. Weiter beinhaltet die Flüssigkeitsversorgungsvorrichtung 5 eine Steuereinheit 57 zum Steuern der Flüssigl<eitsversorgungsvorrichtung 5.

Die Flüssigl<eitsversorgungsvorrichtung 5 dazu ausgebildet, die Flüssigkeit 100 zu Sprühdüse 3 zu leiten. Dabei weist die Anordnung 1 einen Schlauch 6 mit einem ersten Ende und einem zweiten Ende auf, um die Flüssigkeit 100 von der Flüssigkeitsversorgungsvorrichtung 5 zur Sprühdüse 3, insbesondere von der Flüssigl<eitsversorgungsvorrichtung 5 zum unbemannten Luftfahrzeug 2 und zur Sprühdüse 3, zu führen. Hierzu ist der Schlauch 6 mit einem ersten Ende des Schlauchs 6 mit der Flüssigkeitsversorgungsvorrichtung 5 und mit einem zweiten Ende des Schlauchs 6 mit der Sprühdüse 3 verbunden, um die Flüssigkeit 100 von der Flüssigl<eitsversorgungsvorrichtung 5 zur Sprühdüse 3 zu führen, um die Sprühdüse 3 mit der Flüssigkeit 100 zum Versprühen der Flüssigkeit 100 mit der Sprühdüse 3 zu versorgen. Dabei ist der Schlauch 6 mit seinem zweiten Ende durch das Rohr, durch welches die Sprühlanze 4 gefertigt ist, zur Sprühdüse 3 geführt und mit der Sprühdüse 3 verbunden. Dabei weist die Sprühlanze 4 in ihrem Innern Schaumstoffkörper auf, durch welche der durch die Sprühlanze 4 geführte Schlauch 6 in der Sprühlanze 4 gehalten ist.

Die Flüssigl<eitsversorgungsvorrichtung 5 umfasst eine Pumpe 54, um die Flüssigkeit 100, mit einem Druck von bis zu 180 bar in den Schlauch 6 einzuleiten. Weiter weist die Flüssigl<eitsversorgungsvorrichtung 5 eine Rolle 55 zum Aufwickeln des Schlauchs 6 auf.

Der Schlauch 6 weist einen ersten Abschnitt auf, welcher dem ersten Ende des Schlauchs 6 anschliesst und dass der Schlauch 6 einen zweiten Abschnitt aufweist, welcher dem zweiten Ende des Schlauchs 6 anschliesst, wobei der Schlauch 6 in seinem ersten Abschnitt einen grösseren Durchmesser als in seinem zweiten Abschnitt aufweist.

Ausserdem weist der Schlauch 6 eine Reissfestigkeit, insbesondere nach DIN EN ISO 527 von 2019, von mindestens 18 N/mm² auf. Genauer weist der Schlauch 6 einen Innenschlauch und eine Ummantelung auf. Dabei weist der Innenschlauch eine Reissfestigkeit, insbesondere nach DIN EN ISO 527 von 2019, von mindestens 18 N/mm² auf. Ausserdem weist die Ummantelung eine Reissfestigkeit, insbesondere nach DIN EN ISO 527 von 2019, von mindestens 12 N/mm² auf.

Wie in den Figur 1a, 1b und 1c erkennbar, ist der Schlauch 6 in einem Bereich seines zweiten Endes am Landegestell 7 des unbemannten Luftfahrzeugs befestigt. Dadurch bildet den Schlauch 6 ein Sicherungssystem für das unbemannte Luftfahrzeug 2.

Die Anordnung 1 beinhaltet eine Fernsteuerung, welche zum Fernsteuern des unbemannten Luftfahrzeugs ausgebildet ist. Die Fernsteuerung ist zudem zum Fernsteuern der Flüssigl<eitsversorgungsvorrichtung 5 ausgebildet.

Das unbemannte Luftfahrzeug 2 ist zudem mit einem Autopiloten ausgerüstet und dadurch für ein autonomes Fliegen ausgebildet. Hierzu weist der Autopilot ein auf Echtzeitl<inematil< (RTI<) basierendes Navigationsmodul auf. Dadurch kann das unbemannte Luftfahrzeug problemlos mit einer maximalen Abweichung von 1 cm bis 2 cm zu einem gewünschten bzw. geplanten Flugpfad entlang dem gewünschten bzw. geplanten Flugpfad geflogen werden.

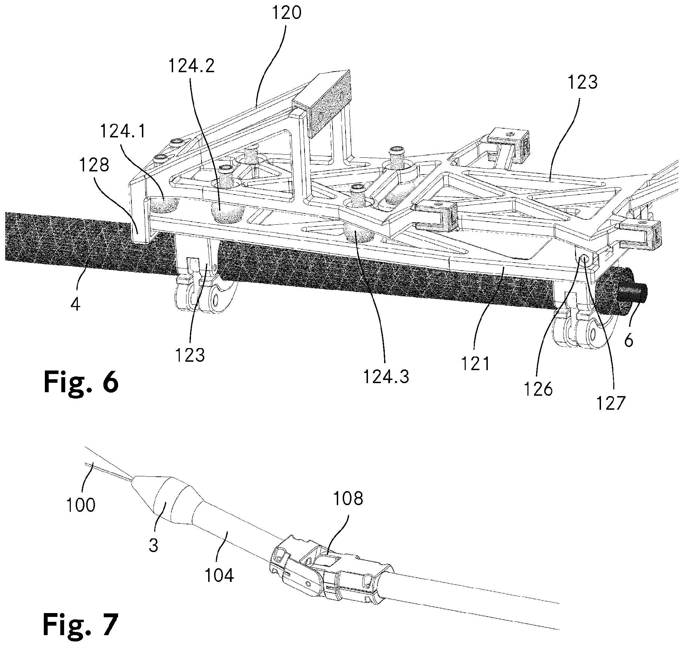

Figur 6 zeigt eine Schrägansicht einer weiteren erfindungsgemässen Haltevorrichtung 120. Diese Haltevorrichtung 120 weist ebenfalls ein erstes Trägerelement 121 und ein zweites Trägerelement 122 auf und ist grösstenteils gleich wie die in den vorgehenden Figuren beschriebene Haltevorrichtung 20 konstruiert. Die in Figur 6 gezeigte Haltevorrichtung 120 weist jedoch nur sechs Dämpferelemente 124.1, 124.2, 124.3 auf. Bei jedem dieser sechs Dämpferelemente 124.1, 124.2, 124.3 ist der I<örper ein Hohlkörper mit einem Hohlraum, welcher Hohlraum mit einem Gel gefüllt ist. Dadurch kann eine Übertragung von Schwingungen vom ersten Trägerelement 121 auf das zweite Trägerelement 122 besonders effektiv reduziert werden.

Weiter weist die in Figur 6 gezeigte Haltevorrichtung 120 ein Scharnier 126 auf. Dabei ist das erste Trägerelement 121 über das Scharnier 126 um eine Scharnierachse 127 des Scharniers 126 schwenkbar mit dem zweiten Trägerelement 122 verbunden. Wenn eines oder mehrere der Dämpferelemente 124.1, 124.2, 124.3 reissen, kann dadurch das erste Trägerelement 121 mit der Sprühdüsenhalteeinrichtung 123 und der Sprühdüse 3 um die Scharnierachse 127 nach unten kippen kann, ohne vom unbemannten Luftfahrzeug 2 abzufallen. Das Scharnier 126 ist einerseits in einem Endbereich des ersten Trägerelements 121 am ersten Trägerelement 121 angeordnet und andererseits in einem Endbereich des zweiten Trägerelements 122 am zweiten Trägerelement 122 angeordnet.

Die in der Figur 6 gezeigte Haltevorrichtung 120 weist zudem ein Sicherungselement 128 zum Halten des ersten Trägerelements 121 auf, falls eines oder mehrere der Dämpferelemente 124.1, 124.2, 124.3 reissen und sich das erste Trägerelement 121 vom zweiten Trägerelement 122 löst und vom zweiten Trägerelement 122 abfällt wegkippt. Das Sicherungselement 128 ist am zweiten Trägerelement 122 angeordnet und hintergreift das erste Trägerelement 121, um das erste Trägerelement 122 zu halten, falls eines oder mehrere des der Dämpferelement 124.1, 124.2, 124.3 reissen und sich das erste Trägerelement 121 vom zweiten Trägerelement 122 löst und vom zweiten Trägerelement 122 wegkippt.

Figur 7 zeigt eine Ansicht einer weiteren Sprühlanze 104, welche von in der Anordnung 1 eingesetzt werden kann. Diese Sprühlanze 104 weist ein I<nicl<gelenl< 108 auf, durch welches I<nicl<gelenl< 108 eine Ausrichtung der Sprühdüse 3 relativ zum unbemannten Luftfahrzeug 2 einstellbar ist, um eine Sprührichtung, in welche Sprührichtung relativ zum unbemannten Luftfahrzeug 2 mit der Sprühdüse 3 die Flüssigkeit 100 versprühbar ist, einzustellen.

Unabhängig davon, ob die Anordnung 1 die in den Figuren 1a bis 4b gezeigte Haltevorrichtung 20 oder die in der Figur 6 gezeigte Haltevorrichtung umfasst, und auch unabhängig davon, ob die Anordnung die in den Figuren 1a bis 4b sowie 6 gezeigte Sprühlanze 4 oder die in Figur 7 gezeigte Sprühlanze 104 umfasst, kann die Anordnung 1 dazu eingesetzt werden, eine Fassade oder ein Dach eines Gebäudes mit der Flüssigkeit 100, insbesondere der Reinigungsflüssigkeit, zu besprühen. In einem Verfahren zum Betreiben der Anordnung 1 mit dem unbemannten Luftfahrzeug 2 wird eine Fassade oder ein Dach eines Gebäudes abgeflogen und dabei die Fassade bzw. das Dach mit der Flüssigkeit 100, insbesondere der Reinigungsflüssigkeit, besprüht wird.

Dabei kann in einem ersten Schritt das Gebäude mit der zu reinigenden Fassade und/oder dem zu reinigenden Dach mit dem unbemannten Luftfahrzeug 2 abgeflogen und mit einem Sensor gescannt und auf seine Dimensionen vermessen werden. Anschliessend wird in einem zweiten Schritt mit dem unbemannten Luftfahrzeug 2 die zu reinigende Fassade bzw. das zu reinigende Dach abgeflogen, insbesondere automatisch abgeflogen, und mit der Flüssigkeit 100, insbesondere der Reinigungsflüssigkeit, besprüht. Hierzu weist das unbemannte Luftfahrzeug 2 vorteilhafterweise einen Sensor 8 zum Scannen und vermessen der Dimensionen der zu reinigenden Fassade und/oder des zu reinigenden Dachs auf. Ein solcher Sensor 8 kann beispielsweise ein Bildsensor, insbesondere eine Stereokamera, oder ein LIDAR sein. Um das automatische Abfliegen der zu reinigenden Fassade bzw. des zu reinigenden Dachs zu ermöglichen, ist das unbemannte Luftfahrzeug 2 mit dem Autopilot ausgerüstet, welcher dazu ausgebildet ist, mit dem unbemannten Luftfahrzeug 2 während des Besprühens mit der Flüssigkeit 100 die zu reinigende Fassade und/oder das zu reinigende Dach automatisch abzufliegen.

Die Erfindung ist nicht auf die vorgehend im Zusammenhang mit den Figuren beschriebenen Ausführungsbeispiele beschränkt. Weitere Varianten und I<ombinationen zur Ausführung der Erfindung sind dem Fachmann unmittelbar zugänglich.

Zusammenfassend ist festzustellen, dass eine Vorrichtung sowie ein Verfahren geschaffen werden, welche ein gleichmässiges Besprühen einer Fassade oder eines Dachs eines Gebäudes mit einer Flüssigkeit, insbesondere einer Reinigungsflüssigkeit, rasch und kostengünstig ermöglichen.

## Patentansprüche

1. Haltevorrichtung (20, 120) zum Anbringen einer Sprühdüse (3) an einem unbemannten Luftfahrzeug (2), insbesondere an einem unbemannten Drehflügelluftfahrzeug, um vom unbemannten Luftfahrzeug (2) aus im Flug des unbemannten Luftfahrzeugs (2) mit der am unbemannten Luftfahrzeug (2) angebrachten Sprühdüse (3) eine Flüssigkeit (100), insbesondere eine Reinigungsflüssigkeit, zu versprühen, die Haltevorrichtung (20, 120) umfassend
a) ein erstes Trägerelement (21, 121),
b) eine Sprühdüsenhalteeinrichtung (23) zum Halten der Sprühdüse (3), welche Sprühdüsenhalteeinrichtung (23, 123) am ersten Trägerelement (21, 121) angeordnet ist,
c) ein zweites Trägerelement (22, 122), und
d) wenigstens ein Dämpferelement (24.1, ... 24.8, 124.1, 124.2, 124.3), mit welchem wenigstens einen Dämpferelement (24.1, ... 24.8, 124.1, 124.2, 124.3) das erste Trägerelement (21, 121) am zweiten Trägerelement (22, 122) gehalten ist und welches wenigstens eine Dämpferelement (24.1, ... 24.8, 124.1, 124.2, 124.3) zwischen dem ersten Trägerelement (21, 121) und dem zweiten Trägerelement (22, 122) angeordnet ist, um eine Übertragung von Schwingungen vom ersten Trägerelement (21, 121) auf das zweite Trägerelement (22, 122) zu reduzieren.

2. Haltevorrichtung (20, 120) nach Anspruch 1, **dadurch gekennzeichnet, dass** jedes des wenigstens einen Dämpferelements (24.1, ... 24.8, 124.1, 124.2, 124.3) einen I<örper aus Gummi aufweist.

3. Haltevorrichtung (120) nach Anspruch 2, **dadurch gekennzeichnet, dass** bei jedem des wenigstens einen Dämpferelements (124.1, 124.2, 124.3) der I<örper ein Hohlkörper mit einem Hohlraum ist, welcher Hohlraum vorzugsweise mit einem Gel gefüllt ist.

4. Haltevorrichtung (120) nach einem der Ansprüche 1 bis 3, **gekennzeichnet durch** ein Scharnier (126), wobei das erste Trägerelement (121) über das Scharnier (126) um eine Scharnierachse (127) des Scharniers (126) schwenkbar mit dem zweiten Trägerelement (122) verbunden ist.

5. Haltevorrichtung (120) nach einem der Ansprüche 1 bis 4, **gekennzeichnet durch** ein Sicherungselement (128) zum Halten des ersten Trägerelements (121), falls eines oder mehrere des wenigstens einen Dämpferelements (124.1, 124.2, 124.3) reisst und sich das erste Trägerelement (121) vom zweiten Trägerelement (122) löst und vom zweiten Trägerelement (122) abfällt oder vom zweiten Trägerelement (122) wegkippt.

6. Haltevorrichtung (20, 120) nach einem der Ansprüche 1 bis 5, **gekennzeichnet durch** wenigstens einen flexiblen Abstandhalter (25.1, ... 25.5) zum Anbringen des zweiten Trägerelements (22, 122) am unbemannten Luftfahrzeug (2).

7. Anordnung (1) aus einem unbemannten Luftfahrzeug (2), insbesondere unbemannten Drehflügelluftfahrzeug, einer Haltevorrichtung (20, 120) nach einem der Ansprüche 1 bis 6 und einer Sprühdüse (3) zum Versprühen einer Flüssigkeit (100), insbesondere einer Reinigungsflüssigkeit, wobei die Sprühdüse (3) durch die Haltevorrichtung (20, 120) am unbemannten Luftfahrzeug (2) angebracht ist, indem die Sprühdüse (3) von der Sprühdüsenhalterung (23, 123) der Haltevorrichtung (20, 120) gehalten ist und die Haltevorrichtung (20, 120) an ihrem zweiten Trägerelement (22, 122) am unbemannten Luftfahrzeug (2) angebracht ist.

8. Anordnung (1) nach Anspruch 7, **dadurch gekennzeichnet, dass** die Anordnung (1) eine Flüssigl<eitsversorgungsvorrichtung (5) zum Versorgen der Sprühdüse (3) mit der Flüssigkeit (100), insbesondere der Reinigungsflüssigkeit, aufweist, um mit der Sprühdüse (3) die Flüssigkeit (100) zu versprühen.

9. Anordnung (1) nach Anspruch 8, **dadurch gekennzeichnet, dass** die Anordnung (1) einen Schlauch (6) mit einem ersten Ende und einem zweiten Ende aufweist, um die Flüssigkeit (100) von der Flüssigl<eitsversorgungsvorrichtung (5) zur Sprühdüse (3), insbesondere von der Flüssigl<eitsversorgungsvorrichtung (5) zum unbemannten Luftfahrzeug (2) und zur Sprühdüse (3), zu führen.

10. Anordnung (1) nach Anspruch 9, **dadurch gekennzeichnet, dass** der Schlauch (6) einen ersten Abschnitt aufweist, welcher dem ersten Ende des Schlauchs (6) anschliesst und dass der Schlauch (6) einen zweiten Abschnitt aufweist, welcher dem zweiten Ende des Schlauchs (6) anschliesst, wobei der Schlauch (6) in seinem ersten Abschnitt einen grösseren Durchmesser als in seinem zweiten Abschnitt aufweist.

11. Anordnung (1) nach Anspruch 9 oder 10, **dadurch gekennzeichnet, dass** das unbemannte Luftfahrzeug (2) ein Landegestell (7) aufweist und der Schlauch (6) in einem Bereich seines zweiten Endes am Landegestell (7) befestigt ist.

12. Anordnung (1) nach einem der Ansprüche 7 bis 11 **gekennzeichnet durch** eine Sprühlanze (4, 104), an welcher Sprühlanze (4, 104) die Sprühdüse (3) angeordnet ist und welche Sprühlanze (4, 104) von der Sprühdüsenhalteeinrichtung (23, 123) gehalten ist.

13. Anordnung (1) nach Anspruch 12 **dadurch gekennzeichnet, dass** die Sprühlanze (104) ein I<nicl<gelenl< (108) aufweist, durch welches I<nicl<gelenl< (108) eine Ausrichtung der Sprühdüse (3) relativ zum unbemannten Luftfahrzeug (2) einstellbar ist, um eine Sprührichtung, in welche Sprührichtung relativ zum unbemannten Luftfahrzeug (2) mit der Sprühdüse (3) die Flüssigkeit (100) versprühbar ist, einzustellen.

14. Anordnung (1) nach einem der Ansprüche 7 bis 13, **dadurch gekennzeichnet, dass** die Sprühdüse (3) eine Rotationsdüse ist.

15. Verfahren zum Betreiben einer Anordnung (1) nach einem der Ansprüche 7 bis 14, **dadurch gekennzeichnet, dass** mit dem unbemannten Luftfahrzeug (2) eine Fassade oder ein Dach eines Gebäudes abgeflogen wird und dabei die Fassade bzw. das Dach mit der Flüssigkeit (100), insbesondere der Reinigungsflüssigkeit, besprüht wird.
